# EUROPEAN PATENT APPLICATION

(11) **EP 3 113 058 A1**
(43) Date of publication of application: **04.01.2017**
(21) Application number: 16176243.0
(22) Date of filing: 24.06.2016
(51) Int. Cl.: G06F 21/44, H04L 29/06

(54) **BESTOWING TRUST FROM A FIRST APPLICATION TO A SECOND APPLICATION**

(30) Priority: 02.07.2015 US 201514790845
(71) Applicant: Entersekt International Limited, Ebene (MU)
(72) Inventor: BRAND, Christiaan Johannes Petrus, Stellenbosc (ZA); MARITZ, Gert Stephanus Herman, 7130 Somerset West (ZA)
(74) Representative: Ertl, Nicholas Justin

(57) **Abstract**

Systems and methods for bestowing trust from a first application (114, 514) to a second application (116, 516) on a single device are provided. A first application (114, 514) has an established trust with an external service provider (132, 532) and a certificate (120) registered with the service provider. In a method, a second application (116, 516) is initiated including generating (412, 562) a key pair and obtaining a certificate (121) for secure communication with the service provider. One of the first application (114, 514) or the second application (116, 516) being a pairing application requests (418, 570) and receives (424, 576) from a secure gateway (150, 550) a pairing key for pairing with the other of the first application (114, 514) or the second application (116, 516) being a pairing receiving application. The pairing application sends (426, 578) the received pairing key to the pairing receiving application using inter-application communication. The pairing receiving application confirms (432, 582) the pairing key to the secure gateway (150, 550) to pair the certificates (120, 121) of the first application (114, 514) and the second application (116, 516) for the external service provider (132, 532).

## Description

### FIELD OF THE INVENTION

This invention relates to systems and methods for bestowing trust from a first application to a second application.

### BACKGROUND TO THE INVENTION

Using communication devices such as mobile phones to perform banking and other financial operations is becoming increasingly popular. For example, users may use communication devices having an appropriate application executing thereon to make payments, conduct balance enquiries and the like.

Prior to making use of such applications, users will typically need to download, install and enrol the application with the relevant service provider (e.g. the bank offering the application).

During enrolment of an exemplary banking application, a one-to-one relationship between the communication device (or the application executing thereon) and the service provider may be established such that the service provider may be able to uniquely identify the communication device. Because the communication device can be uniquely identified, the service provider may, for example, permit the communication device to transact against a specific account at the service provider.

However, it may still be necessary to verify that the communication device belongs to the user against whose account the application will be able to transact. In one exemplary scenario, this will require the user to physically visit a branch of the service provider such that the association between the communication device and the user can be verified.

While enrolment processes such as the above may enable a service provider to identify requests or messages received from a specific application to be uniquely identifiable by a service provider, the process can be cumbersome to repeat where several applications from the same service provider may be utilized.

There is accordingly a need for a solution which alleviates these and/or other problems, at least to some extent.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

### SUMMARY OF THE INVENTION

In accordance with a first aspect of the invention, there is provided a method for bestowing trust from a first application to a second application on a single device wherein a first application has an established trust with an external service provider and the first application has a certificate registered with the external service provider, the method comprising: initiating a second application including generating a key pair and obtaining a certificate for secure communication with the external service provider; one of the first application or the second application being a pairing application requesting and receiving from a secure gateway of the external service provider a pairing key for pairing with the other of the first application or the second application being a pairing receiving application; the pairing application sending the received pairing key to the pairing receiving application using inter-application communication; and, the pairing receiving application confirming the pairing key to the secure gateway to pair the certificates of the first application and the second application for the external service provider.

Further features provide for the second application to locate the first application by searching the device for applications of the same type, and for the searching to be carried out using protocol handlers.

A yet further feature provides for the first application to require authentication from a user before the second application can be paired with the first application.

In one embodiment the inter-application communication is via a protocol handler enabling the pairing application to send information to the pairing receiving application using uniform resource identifiers (URIs). In another embodiment, the inter-application communication is via a messaging object which provides a facility for performing late runtime binding between code of the first application and the second application. In yet another embodiment, the inter-application communication is via extensions of the first application and the second application running in the same sandbox but within separate containers.

A still further feature provides for the first application and the second application to each include a software development kit providing security functionality for the external service provider.

In accordance with a second aspect of the invention, there is provided a method for bestowing trust from a first application to a second application on a single device wherein a first application has an established trust with an external service provider and the first application has a certificate registered with the external service provider, the method carried out at a secure gateway comprising: registering a certificate for secure communication for a second application; receiving a request from one of the first application or the second application being a pairing application for a pairing key for pairing with the other of the first application or the second application being a pairing receiving application; generating a pairing key for the pairing receiving application and sending the pairing key to the pairing application; receiving the pairing key from the pairing receiving application and verifying the received pairing key with the generated pairing key; and pairing the certificates of the first application and the second application for the external service provider.

In accordance with a third aspect of the invention, there is provided a system for bestowing trust from a first application to a second application on a single device wherein a first application has an established trust with an external service provider and the first application has a certificate registered with the external service provider, the system comprising: a second application having a certificate component for generating a key pair and obtaining a certificate for secure communication with the external service provider; one of the first application or the second application being a pairing application having a pairing key component for requesting and receiving from a secure gateway of the external service provider a pairing key for pairing with the other of the first application or the second application being a pairing receiving application; the pairing key component sending the received pairing key to the pairing receiving application using inter-application communication; and the pairing receiving application including a pairing key confirmation component for confirming the pairing key to the secure gateway to pair the certificates of the first application and the second application for the external service provider.

A further feature provides for the second application to include an application locating component for locating the first application by searching the device for applications of the same type.

A yet further feature provides for the pairing receiving application to include a pairing confirmation component for requesting authentication from a user before the second application can be paired with the first application.

In one embodiment the inter-application communication is via protocol handlers enabling the pairing application to send information to the pairing receiving application using uniform resource identifiers (URIs). In another embodiment the inter-application communication is via a messaging object which provides a facility for performing late runtime binding between the code of the first application and the second application. In yet another embodiment, the inter-application communication is via extensions of the first application and the second application running in the same sandbox but within separate containers.

A still further feature provides for the first application and the second application each include a software development kit providing security functionality for the external service provider.

In accordance with a fourth aspect of the invention, there is provided a system for bestowing trust from a first application to a second application on a single device wherein a first application has an established trust with an external service provider and the first application has a certificate registered with the external service provider, the system including a secure gateway including: a certificate registering component for registering a certificate for secure communication for a second application; a pairing key component for receiving a request from one of the first application or the second application being a pairing application for a pairing key for pairing with the other of the first application or the second application being a pairing receiving application; the pairing key component generating a pairing key for the pairing receiving application and sending the pairing key to the pairing application; a pairing key confirmation component for receiving the pairing key from the pairing receiving application and verifying the received pairing key with the generated pairing key; and a pairing component for pairing the certificates of the first application and the second application for the external service provider.

In accordance with a fifth aspect of the invention, there is provided a computer program product for bestowing trust from a first application to a second application on a single device wherein a first application has an established trust with an external service provider and the first application has a certificate registered with the external service provider, the computer program product comprising a computer-readable medium having stored computer-readable program code for performing the steps of: initiating a second application including generating a key pair and obtaining a certificate for secure communication with the external service provider; one of the first application or the second application being a pairing application requesting and receiving from a secure gateway of the external service provider a pairing key for pairing with the other of the first application or the second application being a pairing receiving application; the pairing application sending the received pairing key to the pairing receiving application using inter-application communication; and, the pairing receiving application confirming the pairing key to the secure gateway to pair the certificates of the first application and the second application for the external service provider.

In accordance with a sixth aspect of the invention, there is provided a computer program product for bestowing trust from a first application to a second application on a single device wherein a first application has an established trust with an external service provider and the first application has a certificate registered with the external service provider, the computer program product comprising a computer-readable medium having stored computer-readable program code for performing the steps of: registering a certificate for secure communication for a second application; receiving a request from one of the first application or the second application being a pairing application for a pairing key for pairing with the other of the first application or the second application being a pairing receiving application; generating a pairing key for the pairing receiving application and sending the pairing key to the pairing application; receiving the pairing key from the pairing receiving application and verifying the received pairing key with the generated pairing key; and pairing the certificates of the first application and the second application for the external service provider.

Further features provide for the computer-readable medium to be a non-transitory computer-readable medium and for the computer-readable program code to be executable by a processing circuit.

### BRIEF DESCRIPTION OF THE DRAWINGS

The invention will now be described, by way of example only, with reference to the accompanying representations in which:
FIG. 1 is a schematic diagram which illustrates an exemplary system according to one embodiment;
FIG. 2 is a block diagram which illustrates components of an exemplary system including a communication device;
FIG. 3 is a block diagram which illustrates components of an exemplary system including a secure gateway;
FIG. 4 is a swim-lane flow diagram which illustrates an exemplary method of bestowing trust from a first application to a second application on a single device;
FIG. 5 is a swim-lane flow diagram which illustrates another exemplary method of bestowing trust from a first application to a second application on a single device;
FIG. 6 illustrates an example of a computing device in which various aspects of the disclosure may be implemented; and,
FIG. 7 shows a block diagram of a communication device that may be used in embodiments of the disclosure.

### DETAILED DESCRIPTION WITH REFERENCE TO THE DRAWINGS

The systems and methods described herein enable trust to be bestowed from a first application to a second application. This may find use where a second application is installed on a communication device which has a first application having an existing trust with an external service provider. The described systems and methods may enable the existing trust to be bestowed from the first application to the second application such that trust may be established between the second application and the external service provider.

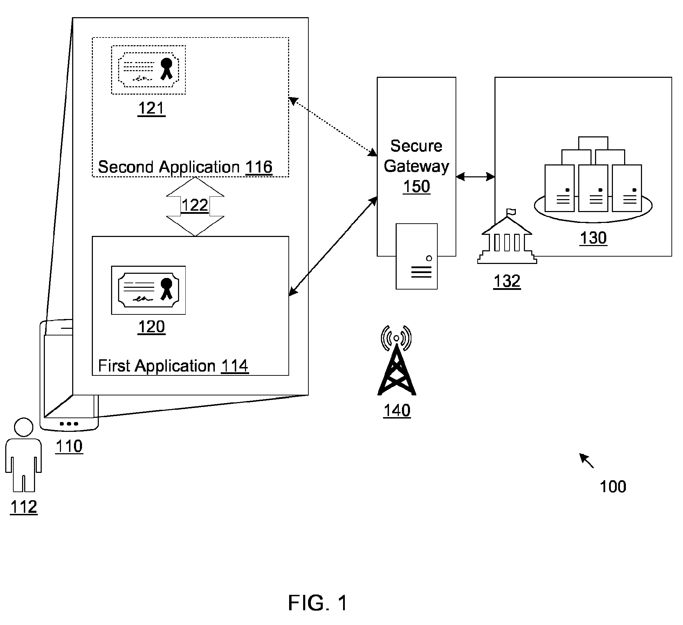

FIG. 1 is a schematic diagram which illustrates an exemplary system (100) for bestowing trust from a first application to a second application. The system (100) includes a communication device (110) of a user (112) as well as a remote server (130) and secure gateway (150) being maintained or operated by an external service provider (132). Although only one user and one communication device are illustrated, it is anticipated that in a practical implementation there may be a plurality of these.

The external service provider (132) may be a financial services provider such as a bank or other financial institution. The remote server (130) may be any appropriate server computer and may include a cloud-based server computer, distributed server computer, a server computer cluster and the like. The remote server (130) may implement a banking system or other financial system in which records of financial accounts of users are maintained. The remote server (130) may further be operable to send messages and data to, and receive messages and data from the communication device (110) via the secure gateway (150) and a communication network (140).

The secure gateway (150) may be configured to act as a gatekeeper between the remote server (130) and the communication device (110) and is operable to establish a secure communication channel between the communication device (110) and the remote server (130). The secure gateway (150) may be a server computer or daemon (e.g. a computer program that runs as a background process, rather than being under the direct control of an interactive user) installed onto a physical or virtual appliance. In some embodiments, the secure gateway (150) may be within a demilitarized zone (DMZ) of the third party service provider (132) and may be maintained or operated by either the external service provider (132) or alternatively by an authentication service provider. In other embodiments, the secure gateway (150) may be provided to the external service provider (132) by an authentication service provider as a software as a service (SaaS) offering.

The secure gateway (150) may be capable of establishing encrypted and/or secure communications with the communication device (110) using, for example, secure sockets layer (SSL) or transport layer security (TLS) secured messages. The secure gateway (150) may also be configured to issue certificates to the communication device (110), verify certificates, revoke certificates and the like. As will be explained in what follows, the secure gateway (150) may also be configured to uniquely identify the communication device (110) and/or requests received therefrom. Thus, the secure gateway enables secure communications between the communication device (110) and the remote server (130) such that the user (112) may use his or her communication device to securely interact with the external service provider (132).

The communication device (110) may be any appropriate electronic device capable of communicating with the secure gateway (150) and/or remote server (130) via the communication network (140). Exemplary communication devices include mobile phones, smart phones, satellite phones, wearable computing devices, personal digital assistants, tablet computers and the like. Exemplary communication devices may further include personal computers such as laptop computers, desktop computers, smart appliances and the like. The communication device (110) may have a processing circuit and a digital memory for storing program code executable by the processing circuit. An operating system (OS) may execute on the communication device (110) and may manage hardware and software resources and may provide common services for software applications executing on the communication device (110).

In the illustrated embodiment, the communication device (110) has a first application (114) installed and executable thereon. The first application (114) may execute in a sandbox provided by the OS which restricts the first application's (114) access to resources. For example, the sandbox may restrict the first application (114) such that it can only read its own files. Thus, the first application (114) runs in its own protected memory space, has its own protected data stores, and is treated as a separate sandboxed application by the OS. This ensures that a vulnerability in the first application (114) does not result in a breach of the complete system.

The first application (114) may be an application issued by the external service provider (132) which enables the user (112) to interact with the remote server (130) via the secure gateway (150). In the illustrated embodiment, the external service provider (132) may be a banking institution and the first application (114) may, for example, be a banking application with which the user (112) can make payments to third parties, request balance information and the like.

The user (112) may have previously enrolled the first application (114) with the external service provider (132) such that an established trust exists between the external service provider (132) and the first application (114). During the enrolment process, which may have required the user (112) to physically visit the external service provider or a branch thereof, the secure gateway (150) may have issued a certificate (120) to the first application (114) for storage in a memory of the first application (114), and linked the certificate (120) to the user (112). The certificate (120) and a key pair generated by the application during enrolment may enable the first application (114) to uniquely identify the first application (114) to the secure gateway (150) and may also enable the secure gateway (150) to verify that messages and data being received are from the communication device (110) of the user (112), and not one of a fraudster.

At a later point, the user (112) may download and install a second application (116). The second application (116) may also be issued by the external service provider (132) and may, for example, provide enhanced functionality over the first application (114). The second application (116) may, for example, be a share trading or foreign exchange application or the like.

In order to avoid the user having to enrol the second application (116), a process which can be laborious and, as mentioned, may require the user (112) to physically visit the external service provider, the systems and methods described herein enable the established trust between the first application (114) and the secure gateway (150) to be bestowed to the second application (116). The trust may be bestowed from the first application to the second application using inter-application communication (122) and may obviate the need for the user to go through the enrolment process again.

In one embodiment, inter-application communication (122) may be provided via a custom uniform resource identifier (URI) scheme enabling the first application (114) to send information to the second application (116) using URIs. In another embodiment, inter-application communication (122) may be provided via a messaging object which provides a facility for performing late runtime binding between the code of the first application (114) and the second application (116). In yet another embodiment, the inter-application communication (122) may be provided via extensions of the first application (114) and the second application (116) running in the same sandbox as the application but within separate containers.

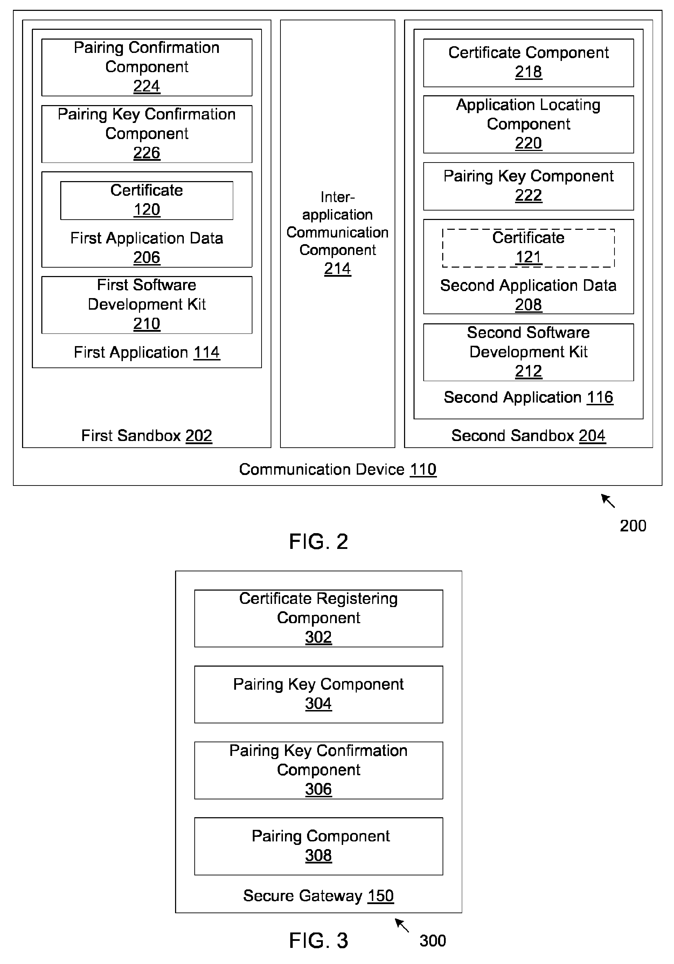

FIG. 2 is a block diagram which illustrates an exemplary system (200) including software components and modules of an exemplary communication device (110). The communication device (110) includes a first sandbox (202) in which the first application may execute and a second sandbox (204) in which the second application (116) may execute. The first application (114) is able to access and update first application data (206). The first application data (206) may include a certificate (120), enrolled with the external service provider (132), which the first application (114) may use to establish a trusted communication channel with the external service provider (132) via the secure gateway (150). Second application data (208) may be accessible and updateable by the second application (116).

As mentioned previously, the separate sandboxes (202), (204) in which the first application (114) and second application (116) execute respectively ensure that the applications (114), (116) do not share resources via the operating system in which they execute. For example, the second application (116) may be prevented or prohibited from accessing or updating the first application data (206) and vice versa.

An inter-application communication component (214) may be provided for enabling communication between the first application (114) and the second application (116). In one embodiment, the inter-application communication component (214) may provide a protocol handler enabling the first application (114) to send information to the second application (116) using a custom uniform resource identifier (URI) scheme. In another embodiment, for example for communication devices having an Apple^{™} IOS^{™} OS, the inter-application communication component (214) may provide inter-application communication via extensions of the first application (114) and the second application (116) running in the same sandbox as the application but within separate containers. In yet another embodiment, for example for communication devices having an Android^{™} OS, the inter-application communication component (214) may provide inter-application communication via a messaging object which provides a facility for performing late runtime binding between the code of the first application (114) and the second application (116).

The first application (114) may also have a first software development kit (210) providing security functionality for the external service provider. Similarly, the second application (116) may have a second software development kit (212) providing security functionality for the external service provider.

The second application (116) may include a certificate component (218) for generating a key pair and obtaining a certificate (121) for secure communication with the external service provider. The second application (116) may include an application locating component (220) for locating the first application (114) by searching the device (110) for applications of the same type. The application locating component (220) may use protocol handlers such as a URI scheme in order to search for the first application (114).

The second application (116) may also have a pairing key component (222) for requesting and receiving from a secure gateway of the external service provider a pairing key for pairing with the first application (114). The pairing key component (222) is also operable to send the received pairing key to the first application (114) using the inter-application communication component (214).

The first application (114) includes a pairing confirmation component (224) for requesting authentication from a user before confirming the pairing key to the secure gateway. The pairing confirmation component (224) may request a username, password, biometric or other credential so as to authenticate the user and confirm that the user wishes to bestow trust from the first application (114) to the second application (116). The first application (114) may also include a pairing key confirmation component (226) for confirming the pairing key to the secure gateway to pair the certificates of the first application and the second application for the external service provider.

FIG. 3 is a block diagram which illustrates a system (300) which includes a secure gateway (150). The secure gateway (150) includes a certificate registering component (302) for registering a certificate for secure communication for a second application. The secure gateway (150) also includes a pairing key component (304) for receiving a request from the second application for a pairing key for pairing with the first application. The pairing key component (304) may generate a pairing key and send the pairing key to the second application. The secure gateway (150) may further include a pairing key confirmation component (306) for receiving the pairing key from the first application and verifying the received pairing key with the generated pairing key. The secure gateway (150) may also include a pairing component (308) for pairing the certificates of the first application and the second application for the external service provider.

In the exemplary systems (200), (300) illustrated in FIGS. 2 and 3, the first application may be referred to as a "pairing receiving application" and the second application may be referred to as a "pairing application". The pairing application requests and receives a pairing key from a secure gateway and the pairing receiving application receives the paring key from the pairing application. However, other embodiments anticipate the first application being the pairing application and the second application being the pairing receiving application.

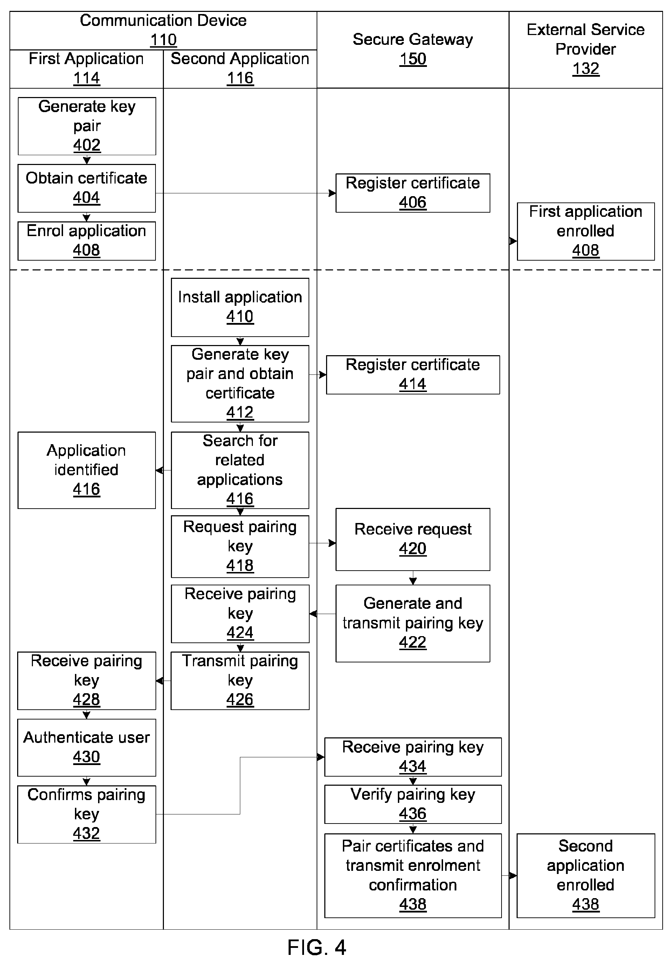

Referring now to FIG. 4 in which a swim-lane flow diagram which illustrates an exemplary method of bestowing trust from a first application (114) to a second application (116) on a single device (110) is shown. In the exemplary embodiment illustrated in FIG. 4, the first application is the pairing receiving application while the second application is the pairing application.

Initially, the first application (114) may be downloaded and installed onto the communication device (110). Steps to establish trust between the first application (114) and the external service provider (132) may then follow. The first application may generate a key pair at a first stage (402) and obtain a certificate at a following stage (404). The certificate may then be registered with a secure gateway (150) at a next stage (406). In some embodiments, the certificate may be obtained from the secure gateway (150), while in other embodiments, the first application may generate the certificate.

At a following stage (408), the first application (114) is enrolled with the external service provider (132). This may include a user of the device (110) physically visiting the external service provider or a branch thereof with the device (110) and another credential (e.g. payment card, identity document, biometric, etc.) such that the external service provider (132) can link the first application (114) to the user. In other cases, the user may use an internet banking facility (or similar) provided by the service provider (132) and with which the user is already registered in order to enrol the first application (114) with the service provider (132). The enrolment process may, for example, include steps which serve to satisfactorily link the first application (114) and/or the certificate associated with the first application, to the user. Once enrolled, the first application (114), and requests or messages received therefrom, may be trusted by the service provider (132) as having originated from the user.

Once the first application (114) has been enrolled with the service provider (132), the user may use the application to securely interact with the service provider (132) via the secure gateway (150).

At a later stage (410), a second application (116), provided by or in cooperation with the external service provider (132), may be downloaded and installed on the same device (110). The second application may offer functionality that is enhanced over or different to that of the first application (114).

At a following stage (412), the second application (116) generates a key pair and obtains a certificate for secure communication with the external service provider. At a next stage (414), the certificate is registered with the secure gateway (150) for secure communication for the second application.

The second application (116) then locates the first application by searching the device (110) for applications of the same type at a following stage (416). In some embodiments, the searching is carried out using protocol handlers (e.g. using known URI schemes such as "firstApp://...").

At a following stage (418), the second application requests a pairing key from the secure gateway (150) for pairing with the first application (114).

The secure gateway (150) receives the request for a pairing key for pairing with the first application from the second application (116) at a following stage (420). The secure gateway (150) may then generate a pairing key and send the pairing key to the second application (116) at a next stage (422).

The second application (116) receives the pairing key from the secure gateway (150) at a following stage (424) and sends the received pairing key to the first application (114) using inter-application communication at a next stage (426). In one embodiment, the inter-application communication may be via a protocol handlers enabling the second application to send information to the first application using URIs. For example, the second application (116) may invoke the URI "firstApplication://[pairing key]" in order to transmit the pairing key to the first application (114).

In another embodiment, the inter-application communication may be via a messaging object which provides a facility for performing late runtime binding between code of the first application and the second application. In yet another embodiment, the inter-application communication is via extensions of the first application and the second application running in the same sandbox but within separate containers.

The first application may receive the pairing key at a next stage (428) and, at a following stage (430), requests authentication from the user. If the user is authenticated, at a next stage (432), the first application confirms the pairing key to the secure gateway (150) to pair the certificates of the first application and the second application for the external service provider.

The secure gateway (150) may then receive the pairing key from the first application (114) at a following stage (434) and verifies the received pairing key with the generated pairing key at a next stage (436). If the received pairing key is verified, the secure gateway (150) may then, at a following stage (438), pair the certificates of the first application and the second application for the external service provider (132) and transmit an enrolment confirmation in respect of the second application (116) to the service provider (132).

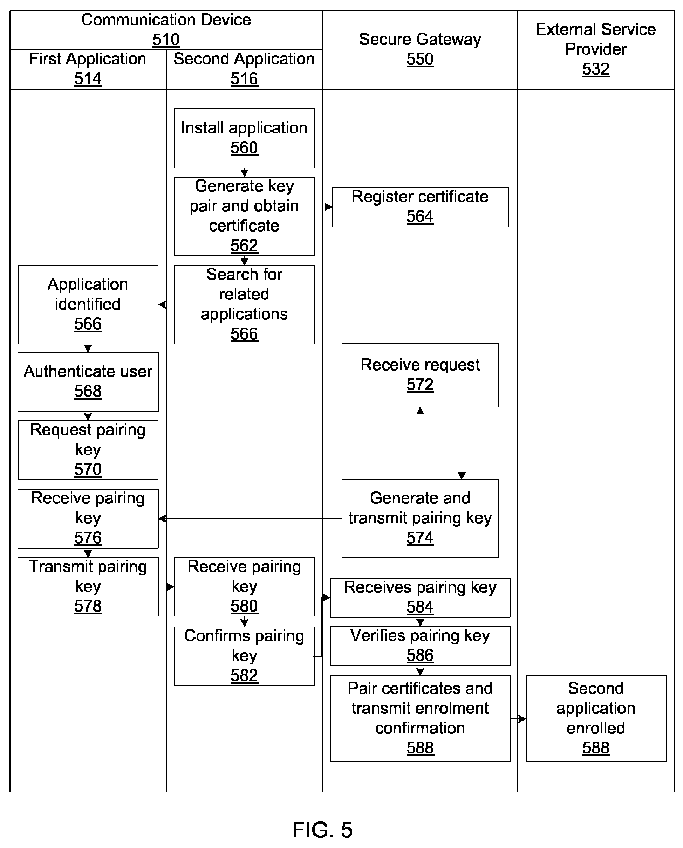

FIG. 5 is a swim-lane flow diagram which illustrates another exemplary method of bestowing trust from a first application (514) to a second application (516) on a single device (510), in which the first application is the pairing application and the second application is the pairing receiving application. The first application (514) has an established trust with an external service provider (532) and the first application (514) has a certificate registered with the external service provider (532). A user may thus use the first application (514) to securely interact with the service provider (532) via the secure gateway (550).

At some stage (560), a second application (516), provided by or in cooperation with the external service provider (532), may be downloaded and installed on the same device (510). The second application (516) may offer functionality that is enhanced over or different to that of the first application (514).

At a following stage (562), the second application (516) generates a key pair and obtains a certificate for secure communication with the external service provider. At a next stage (564), the certificate is registered with the secure gateway (550) for secure communication for the second application (516).

The second application (516) then locates the first application (514) by searching the device (510) for applications of the same type at a following stage (566). The searching may be carried out using protocol handlers.

At a following stage (568), the first application (514) may request authentication from the user and confirm that the user wishes to bestow trust from the first application (514) to the second application (516). If the user is authenticated, the first application (514) requests a pairing key from the secure gateway (550) for pairing the second application (516) at a following stage (570).

The secure gateway (550) receives the request for a pairing key for pairing the second application (516) with the first application (514) from the first application (514) at a following stage (572). The secure gateway (550) may then generate a pairing key and send the pairing key to the first application (514) at a next stage (574).

The first application (514) receives the pairing key from the secure gateway (550) at a following stage (576) and sends the received pairing key to the second application (516) using inter-application communication at a next stage (578).

The second application (516) may receive the pairing key from the first application (514) at a following stage (580) and, at a next stage (582), the second application (516) confirms the pairing key to the secure gateway (550) to pair the certificates of the first application (514) and the second application (516) for the external service provider (532).

The secure gateway (550) may then receive the pairing key from the second application (516) at a following stage (584) and verifies the received pairing key with the generated pairing key at a next stage (586). If the received pairing key is verified, the secure gateway (550) may then, at a following stage (538) pair the certificates of the first application and the second application for the external service provider (532) and transmit an enrolment confirmation in respect of the second application (516) to the external service provider (532) such that the second application may be enrolled.

The described systems and methods thus enable trust to be bestowed from a first application to a second application. This may be advantageous to external service providers who need to link a digital certificate to a particular user, and not merely a device. In particular, this may be advantageous to external service providers having a number of applications available, all of which require an established trust. The systems and methods described herein may lessen the burden on users required to enrol applications and/or certificates with external service providers. Security may also be increased, as trust can more easily be established between second and subsequent applications and external service providers.

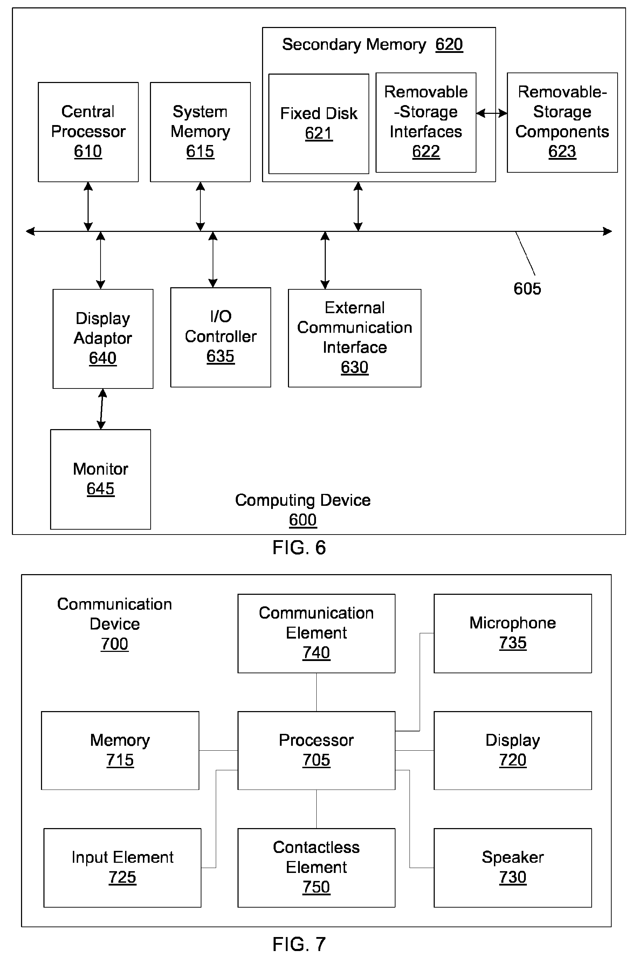

FIG. 6 illustrates an example of a computing device (600) in which various aspects of the disclosure may be implemented. The computing device (600) may be suitable for storing and executing computer program code. The various participants and elements in the previously described system diagrams may use any suitable number of subsystems or components of the computing device (600) to facilitate the functions described herein.

The computing device (600) may include subsystems or components interconnected via a communication infrastructure (605) (for example, a communications bus, a cross-over bar device, or a network). The computing device (600) may include at least one central processor (610) and at least one memory component in the form of computer-readable media.

The memory components may include system memory (615), which may include read only memory (ROM) and random access memory (RAM). A basic input/output system (BIOS) may be stored in ROM. System software may be stored in the system memory (615) including operating system software.

The memory components may also include secondary memory (620). The secondary memory (620) may include a fixed disk (621), such as a hard disk drive, and, optionally, one or more removable-storage interfaces (622) for removable-storage components (623).

The removable-storage interfaces (622) may be in the form of removable-storage drives (for example, magnetic tape drives, optical disk drives, floppy disk drives, etc.) for corresponding removable storage-components (for example, a magnetic tape, an optical disk, a floppy disk, etc.), which may be written to and read by the removable-storage drive.

The removable-storage interfaces (622) may also be in the form of ports or sockets for interfacing with other forms of removable-storage components (623) such as a flash memory drive, external hard drive, or removable memory chip, etc.

The computing device (600) may include an external communications interface (630) for operation of the computing device (600) in a networked environment enabling transfer of data between multiple computing devices (600). Data transferred via the external communications interface (630) may be in the form of signals, which may be electronic, electromagnetic, optical, radio, or other types of signal.

The external communications interface (630) may enable communication of data between the computing device (600) and other computing devices including servers and external storage facilities. Web services may be accessible by the computing device (600) via the communications interface (630).

The external communications interface (630) may also enable other forms of communication to and from the computing device (600) including, voice communication, near field communication, Bluetooth, etc.

The computer-readable media in the form of the various memory components may provide storage of computer-executable instructions, data structures, program modules, and other data. A computer program product may be provided by a computer-readable medium having stored computer-readable program code executable by the central processor (610).

A computer program product may be provided by a non-transient computer-readable medium, or may be provided via a signal or other transient means via the communications interface (630).

Interconnection via the communication infrastructure (605) allows a central processor (610) to communicate with each subsystem or component and to control the execution of instructions from the memory components, as well as the exchange of information between subsystems or components.

Peripherals (such as printers, scanners, cameras, or the like) and input/output (I/O) devices (such as a mouse, touchpad, keyboard, microphone, joystick, or the like) may couple to the computing device (600) either directly or via an I/O controller (635). These components may be connected to the computing device (600) by any number of means known in the art, such as a serial port.

One or more monitors (645) may be coupled via a display or video adapter (640) to the computing device (600).

FIG. 7 shows a block diagram of a communication device (700) that may be used in embodiments of the disclosure. The communication device (700) may be a cell phone, a feature phone, a smart phone, a satellite phone, or a computing device having a phone capability.

The communication device (700) may include a processor (705) (e.g., a microprocessor) for processing the functions of the communication device (700) and a display (720) to allow a user to see the phone numbers and other information and messages. The communication device (700) may further include an input element (725) to allow a user to input information into the device (e.g., input buttons, touch screen, etc.), a speaker (730) to allow the user to hear voice communication, music, etc., and a microphone (735) to allow the user to transmit his or her voice through the communication device (700).

The processor (710) of the communication device (700) may connect to a memory (715). The memory (715) may be in the form of a computer-readable medium that stores data and, optionally, computer-executable instructions.

The communication device (700) may also include a communication element (740) for connection to communication channels (e.g., a cellular telephone network, data transmission network, Wi-Fi network, satellite-phone network, Internet network, Satellite Internet Network, etc.). The communication element (740) may include an associated wireless transfer element, such as an antenna.

The communication element (740) may include a subscriber identity module (SIM) in the form of an integrated circuit that stores an international mobile subscriber identity and the related key used to identify and authenticate a subscriber using the communication device (700). One or more subscriber identity modules may be removable from the communication device (700) or embedded in the communication device (700).

The communication device (700) may further include a contactless element (750), which is typically implemented in the form of a semiconductor chip (or other data storage element) with an associated wireless transfer element, such as an antenna. The contactless element (750) may be associated with (e.g., embedded within) the communication device (700) and data or control instructions transmitted via a cellular network may be applied to the contactless element (750) by means of a contactless element interface (not shown). The contactless element interface may function to permit the exchange of data and/or control instructions between mobile device circuitry (and hence the cellular network) and the contactless element (750).

The contactless element (750) may be capable of transferring and receiving data using a near field communications (NFC) capability (or near field communications medium) typically in accordance with a standardized protocol or data transfer mechanism (e.g., ISO 14443/NFC). Near field communications capability is a short-range communications capability, such as radio-frequency identification (RFID), Bluetooth, infra-red, or other data transfer capability that can be used to exchange data between the communication device (700) and an interrogation device. Thus, the communication device (700) may be capable of communicating and transferring data and/or control instructions via both a cellular network and near field communications capability.

The data stored in the memory (715) may include: operation data relating to the operation of the communication device (700), personal data (e.g., name, date of birth, identification number, etc.), financial data (e.g., bank account information, a bank identification number (BIN), credit or debit card number information, account balance information, expiration date, loyalty provider account numbers, etc.), transit information (e.g., as in a subway or train pass), access information (e.g., as in access badges), etc. A user may transmit this data from the communication device (700) to selected receivers.

The communication device (700) may be, amongst other things, a notification device that can receive alert messages and access reports, a portable merchant device that can be used to transmit control data identifying a discount to be applied, as well as a portable consumer device that can be used to make payments.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The software components or functions described in this application may be implemented as software code to be executed by one or more processors using any suitable computer language such as, for example, Java, C++, or Perl using, for example, conventional or object-oriented techniques. The software code may be stored as a series of instructions, or commands on a non-transitory computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a non-transient computer-readable medium containing computer program code, which can be executed by a computer processor for performing any or all of the steps, operations, or processes described.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

Throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A method for bestowing trust from a first application (114, 514) to a second application (116, 516) on a single device (110, 510) wherein a first application (114, 514) has an established trust with an external service provider (132, 532) and the first application (114, 514) has a certificate (120) registered with the external service provider (132, 532), the method comprising:
initiating a second application (116, 516) including generating a key pair and obtaining (412, 562) a certificate (121) for secure communication with the external service provider (132, 532);
one of the first application (114, 514) or the second application (116, 516) being a pairing application requesting (418, 570) and receiving (424, 576) from a secure gateway (150, 550) of the external service provider (132, 532) a pairing key for pairing with the other of the first application (114, 514) or the second application (116, 516) being a pairing receiving application;
the pairing application sending (426, 578) the received pairing key to the pairing receiving application using inter-application communication; and,
the pairing receiving application confirming (432, 582) the pairing key to the secure gateway (150, 550) to pair the certificates (120, 121) of the first application (114, 514) and the second application (116, 516) for the external service provider (132, 532).

2. The method as claimed in claim 1, including:
the second application (116, 516) locating the first application (114, 514) by searching (416, 566) the device (110, 510) for applications of the same type, wherein searching is carried out using protocol handlers.

3. The method as claimed in claim 1 or claim 2, including:
the first application (114, 514) requiring authentication (430, 568) from a user before the second application (116, 516) can be paired with the first application (114,514).

4. The method as claimed in any one of claims 1 to 3, wherein the inter-application communication is via a protocol handler enabling the pairing application to send information to the pairing receiving application using uniform resource identifiers (URIs).

5. The method as claimed in any one of claims 1 to 3, wherein the inter-application communication is via a messaging object which provides a facility for performing late runtime binding between code of the first application (114, 514) and the second application (116, 516).

6. The method as claimed in any one of claims 1 to 3, wherein the inter-application communication is via extensions of the first application (114, 514) and the second application running in the same sandbox but within separate containers.

7. A method for bestowing trust from a first application (114, 514) to a second application (116, 516) on a single device (110, 510) wherein a first application (114, 514) has an established trust with an external service provider (132, 532) and the first application (114, 514) has a certificate (120) registered with the external service provider (132, 532), the method carried out at a secure gateway (150, 550) comprising:
registering (414, 564) a certificate (121) for secure communication for a second application (116, 516);
receiving (420, 572) a request from one of the first application (114, 514) or the second application (116, 516) being a pairing application for a pairing key for pairing with the other of the first application (114, 514) or the second application (116, 516) being a pairing receiving application;
generating (422, 574) a pairing key for the pairing receiving application and sending the pairing key to the pairing application;
receiving (434, 584) the pairing key from the pairing receiving application and verifying (436, 586) the received pairing key with the generated pairing key; and
pairing (438, 588) the certificates (120, 121) of the first application (114, 514) and the second application (116, 516) for the external service provider (132, 532).

8. A system for bestowing trust from a first application (114, 514) to a second application (116, 516) on a single device (110, 510) wherein a first application (114, 514) has an established trust with an external service provider (132, 532) and the first application (114, 514) has a certificate (120) registered with the external service provider (132, 532), the system comprising:
a second application (116, 516) having a certificate component (218) for generating a key pair and obtaining a certificate (121) for secure communication with the external service provider (132, 532);
one of the first application (114, 514) or the second application (116, 516) being a pairing application having a pairing key component (222) for requesting and receiving from a secure gateway (150, 550) of the external service provider (132, 532) a pairing key for pairing with the other of the first application (114, 514) or the second application (116, 516) being a pairing receiving application;
the pairing key component (222) sending the received pairing key to the pairing receiving application using inter-application communication; and
the pairing receiving application including a pairing key confirmation component (226) for confirming the pairing key to the secure gateway (150, 550) to pair the certificates (120, 121) of the first application (114, 514) and the second application (116, 516) for the external service provider (132, 532).

9. The system as claimed in claim 8, wherein the second application (116, 516) includes:
an application locating component (220) for locating the first application (114, 514) by searching the device (110, 510) for applications of the same type.

10. The system as claimed in claim 8 or claim 9, wherein the first application (114, 514) includes:
a pairing confirmation component (224) for requesting authentication from a user before the second application (116, 516) can be paired with the first application (114,514).

11. The system as claimed in any one of claims 8 to 10, wherein the inter-application communication is via protocol handlers enabling the pairing application to send information to the pairing receiving application using uniform resource identifiers (URIs).

12. The system as claimed in any one of claims 8 to 10, wherein the inter-application communication is via a messaging object which provides a facility for performing late runtime binding between the code of the first application (114, 514) and the second application (116, 516).

13. The system as claimed in any one of claims 8 to 10, wherein the inter-application communication is via extensions of the first application (114, 514) and the second application (116, 516) running in the same sandbox but within separate containers.

14. The system as claimed in any one of claims 8 to 13, wherein the first application (114, 514) and the second application (116, 516) each include a software development kit (210, 212) providing security functionality for the external service provider (132, 532).

15. A system for bestowing trust from a first application (114, 514) to a second application (116, 516) on a single device (110, 510) wherein a first application (114, 514) has an established trust with an external service provider (132, 532) and the first application (114, 514) has a certificate (120) registered with the external service provider (132, 532), the system including a secure gateway (150, 550) including:
a certificate registering component (302) for registering a certificate (121) for secure communication for a second application (116, 516);
a pairing key component (304) for receiving a request from one of the first application (114, 514) or the second application (116, 516) being a pairing application for a pairing key for pairing with the other of the first application (114, 514) or the second application (116, 516) being a pairing receiving application;
the pairing key component (304) generating a pairing key for the pairing receiving application and sending the pairing key to the pairing application;
a pairing key confirmation component (306) for receiving the pairing key from the pairing receiving application and verifying the received pairing key with the generated pairing key; and
a pairing component (308) for pairing the certificates (120, 121) of the first application (114, 514) and the second application (116, 516) for the external service provider (132, 532).
